# EUROPÄISCHE PATENTANMELDUNG

(11) **EP 1 578 087 A1**
(43) Veröffentlichungstag der Anmeldung: **21.09.2005**
(21) Anmeldenummer: 04029173.4
(22) Anmeldetag: 09.12.2004
(51) Int. Cl.: H04L 29/12, H04L 12/28

(54) **Verfahren für den Zugang in ein privates Computernetzwerk über ein Mobilfunknetz**

(30) Priorität: 17.03.2004 DE 102004013325
(71) Anmelder: Vodafone Holding GmbH, 40213 Düsseldorf (DE)
(72) Erfinder: Wahsner, Robert, 40211 Düsseldorf (DE)
(74) Vertreter: Weisse, Jürgen

(57) **Zusammenfassung**

Die Erfindung betrifft ein Zugangsverfahren für den Zugang eines Computers (20) in ein privates Computernetzwerk (24, 26, 28, 30) über ein Mobilfunknetz (10), wobei der Computer (20) eine Einrichtung (22) für den Zugang zu dem Mobilfunknetz (10) aufweist. Dem privaten Computernetzwerk (24, 26, 28, 30) wird eine eigene APN/Einwahlnummer zugeordnet, über die der Computer (20) Zugang zu dem privaten Computernetzwerk (24, 26, 28, 30) erhält.

## Beschreibung

### Technisches Gebiet

Die Erfindung betrifft ein Zugangsverfahren für den Zugang eines Computers in ein privates Computernetzwerk über ein Mobilfunknetz, wobei der Computer eine Einrichtung für den Zugang zu dem Mobilfunknetz aufweist.

### Stand der Technik

Mobilfunknetze werden mittlerweile nicht nur allein zum Telefonieren benötigt, sondern auch zur Datenübertragung mit Computern, wie Notebooks. Die Mobilfunknetze arbeiten üblicherweise nach dem GSM- oder UMTS-Standard (GSM= Global System for Mobile communication; UMTS= Universal Mobile Telecomunication System). Für die Datenübertragung via Mobilfunknetz sind verschiedene zusätzliche Standards definiert worden. Beispielsweise ermöglichen HSCSD (=High Speed Circuit Switched Data) oder GPRS (= General Packet Radio Service) eine gute Datenübertragung über ein GSM-Mobilfunknetz.

Dabei benutzt der HSCSD-Standard mehrere Funkkanäle gleichzeitig, d. h. dem Nutzer werden bei der Datenübertragung vorübergehend gleich mehrere Frequenzen zugewiesen. Damit lässt sich die mobile Datenübertragungsrate auf bis zu 38,4 KBit/s steigern. So ermöglicht HSCSD zwar hohe Übertragungsraten, die sich auch schon für das Surfen im Internet eignen, doch verbraucht das Verfahren eine große Menge an Leitungskapazität.

Beim GPRS oder Allgemeiner Paket-Datenfunk werden die Daten nicht leitungsvermittelt, sondern paketweise übertragen, allerdings konkurrierend zur Sprachübermittlung.

Die weiteste Fortentwicklung und die effizienteste Nutzung der GSM- und auch der amerikanischen TDMA-Netze sind die *EDGE* (= Enhanced Datarates for Global Evolution). Durch ein neues Modulationsverfahren kann die Datenübertragungsgeschwindigkeit eines GSM-Kanals auf 48 kBit/s erhöht werden. Durch Kanalbündelung von bis zu acht Kanälen lassen sich so 8 x 48 kBit/s übertragen.

UMTS nutzt Merkmale der Leitungs- sowie der Paketvermittlung, um eine schnelle und ressourcenschonende Übertragung von Daten, Sprache, Bildern und Videos zu ermöglichen. Über ein Code-Multiplex-Verfahren können mehrere Nutzer zeitgleich auf einen Kanal zugreifen. Es sind mit UMTS Datendurchsätze von 384 kbit/s vorgesehen, bei stationären Endgeräten sogar bis zu 2 MBit/s. Jedoch bezeichnet die Geschwindigkeit von 384 kBit/s die Bandbreite innerhalb einer Zelle. Wird diese von mehreren Anwendern genutzt, sinkt das Übertragungsvolumen entsprechend.

Computer können so über Mobilfunknetze beispielsweise auf Firmennetze zugreifen. Die Computer verfügen dazu über geeignete Sende- und Empfangseinrichtungen. Dies können PCMCIA-Karten sein. Alternativ können auch Verbindungen zu Mobilfunkendgeräten hergestellt werden, die diese Sende- und Empfangsfunktionen zur Datenübertragung nach einem der oben genannten Standards aufweisen.

APN (=Access Point Name) ist der Name des Zugangspunktes für einen Computer zu einem Netzwerk. APN bezeichnet im Mobilfunk den Server, der den Zugang zu Datendiensten erlaubt. Beim WAP- oder Internet-Zugriff über GPRS muss immer der Access Point Name angegeben werden.

Als APN wird nach dem derzeitigen Stand der Name des Mobilfunkbetreibers angegeben, beispielsweise "xxx.vodafone.de". Firmenkunden können an der Stelle der "xxx" ihren Firmennamen eintragen. Der Name des Zugriffspunktes enthält aber immer gleichzeitig den Namen des Mobilfunkbetreibers. Viele Firmenkunden scheuen sich daher, solche Einrichtungen zu nutzen, da sie nicht den Namen des Mobilfunkbetreibers als APN wollen.

### Offenbarung der Erfindung

Aufgabe der Erfindung ist es, ein Verfahren zu schaffen, bei dem der Name der APN an die Bedürfnisse von Firmenkunden angepasst werden kann, um auf ein firmeninternes Netzwerk zugreifen zu können.

Erfindungsgemäß wird die Aufgabe dadurch gelöst, dass bei einem Zugangsverfahren der eingangs genannten Art für den Zugang eines Computers in ein privates Computernetzwerk über ein Mobilfunknetz, dem privaten Computernetzwerk eine eigene APN/Einwahlnummer zugeordnet wird, über die der Computer Zugang zu dem privaten Computernetzwerk erhält. Durch das erfindungsgemäße Zugangsverfahren in ein privates Computernetzwerk kann sich der Anwender, in der Regel Firmenkunden, grundsätzlich eine beliebige APN/Einwahlnummer aussuchen, die beispielsweise dem Firmennamen oder einem Logo entspricht. Dies eröffnet zudem die Möglichkeit, dass Namen bzw. Nummern gewählt werden können, die gut zu merken sind. Der Firmenkunde erhält durch das erfindungsgemäße Verfahren einen zusätzlichen Freiheitsgrad in der Gestaltung seiner "Corporate Identity".

In einer vorteilhaften Ausgestaltung der Erfindung erfolgt eine Zugangsberechtigungsabfrage, wobei der Zugang nur für solche Computer zugelassen wird, die berechtigt sind. Mit dieser Maßnahme soll verhindert werden, dass Unberechtigte über die APN/Einwahlnummer auf ein Firmennetz zugreifen können. Es werden somit nur solche Computer für den Zugang zum firmeneigenen Netzwerk zugelassen, denen es zuvor erlaubt wurde bzw. denen eine entsprechende Berechtigung durch einen Administrator eingeräumt wurde.

Eine weitere vorteilhafte Ausgestaltung des erfindungsgemäßen Verfahrens ergibt sich dadurch, dass die übertragenen Daten verschlüsselt sind. Damit entsteht ein weiterer Schutz vor unbefugtem Zugriff auf das Netzwerk mit der eigenen APN/Einwahlnummer. Auf die Daten im Netzwerk mit der APN/Einwahlnummer kann nicht ohne entsprechende Mittel zur Dekodierung zugegriffen werden. Dies bietet eine erhöhte Sicherheit für ein solches System.

In einer bevorzugten Ausbildung des erfindungsgemäßen Verfahrens werden unterschiedliche Berechtigungsstufen zugeordnet. Auf diese Weise können die Teilnehmer bereits beim Zugriff auf das Firmennetzwerk in ihren Befugnissen eingeschränkt werden. So kann beispielsweise ein Gastzugriff erlaubt sein, der dem Teilnehmer nur den Lesezugriff auf dafür vorgesehene Daten ermöglicht. Im anderen Extrem kann ein Teilnehmer mit Administratorrechten auf alle Daten zugreifen und auch Systemveränderungen am Netzwerk vornehmen.

In einer weitem vorteilhaften Ausgestaltung des erfindungsgemäßen Zugangsverfahrens werden dem Computer für den Zugang nur bestimmte Bereiche des Computernetzwerks zugeordnet. Diese Art der Beschränkung erlaubt es einem bestimmten Computer nur auf Netzwerkbereiche zuzugreifen, die zuvor vereinbart wurden.

Eine besondere Ausgestaltung der Erfindung ergibt sich, indem die APN einem Intemet-Domain-Namen entspricht. Durch diese Maßnahme wird erreicht, dass sich Teilnehmer nicht verschiedene Namen, Nummern oder Adressen merken muss. Eine einzige Adresse, nämlich die, welche dem Domain-Namen des Internetzugangs entspricht, reicht aus.

Besondere Vorteile sind zu erwarten, wenn dem privaten Computernetzwerk ein eigenes Gateway (GSN) zugeordnet wird. Ein Gateway ist ein Netzkonverter. Dabei handelt es sich um ein System, das die Verbindung zwischen zwei verschiedenen Netzarten herstellt und Daten zwischen verschiedenen Protokollarten umsetzt, um das Netz vom jeweils anderen aus zugänglich zu machen. Dazu fragt das Gateway die Zugangsberechtigung im HLR (= Home Location Register) ab. Ein solches Gateway verringert den Aufwand der technischen Verwaltung sowohl für das Mobilfunknetz des Mobilfunknetzbetreibers, als auch für das firmeninterne Netzwerk. Es erhöht auch die Sicherheit, da nur mittels SIM-Karten eines Teilnehmers überhaupt der Zugang zu einem Firmennetz erlaubt ist.

Vorteilhafte Ausbildungen des erfindungsgemäßen Zugangsverfahrens ergeben sich auch dadurch, dass dem privaten Computernetzwerk sowohl öffentliche als auch private IP-Adressen zugeordnet werden können. Damit kann auf das Computernetzwerk über entsprechende IP-Adressen zugegriffen werden.

In einer weiteren vorteilhaften Ausgestaltung des erfindungsgemäßen Zugangsverfahrens ist das Computernetzwerk durch eine "Firewall" und/oder "Portsperren" geschützt. Durch diese Maßnahme wird es sogenannten "Hackern" (= *Computerbenutzer, die unberechtigt in fremde Computersysteme eindringen; Sie versuchen, mit kleineren Computern und Online-Verbindungen die Passwörter größerer Rechenzentren und Computernetzwerke herauszufinden, um Einblick in deren Daten zu erhalten*) erheblich erschwert, ohne Zugangsberechtigung Daten aus dem Computernetzwerk unberechtigt zu erhalten. Durch diese zusätzliche Barriere wird das Computernetzwerk bestmöglich vor Attacken von Computerhackern geschützt.

Weitere Vorteile ergeben sich aus dem Gegenstand der Unteransprüche sowie der Zeichnung mit der dazugehörigen Beschreibung.

### Kurze Beschreibung der Zeichnung

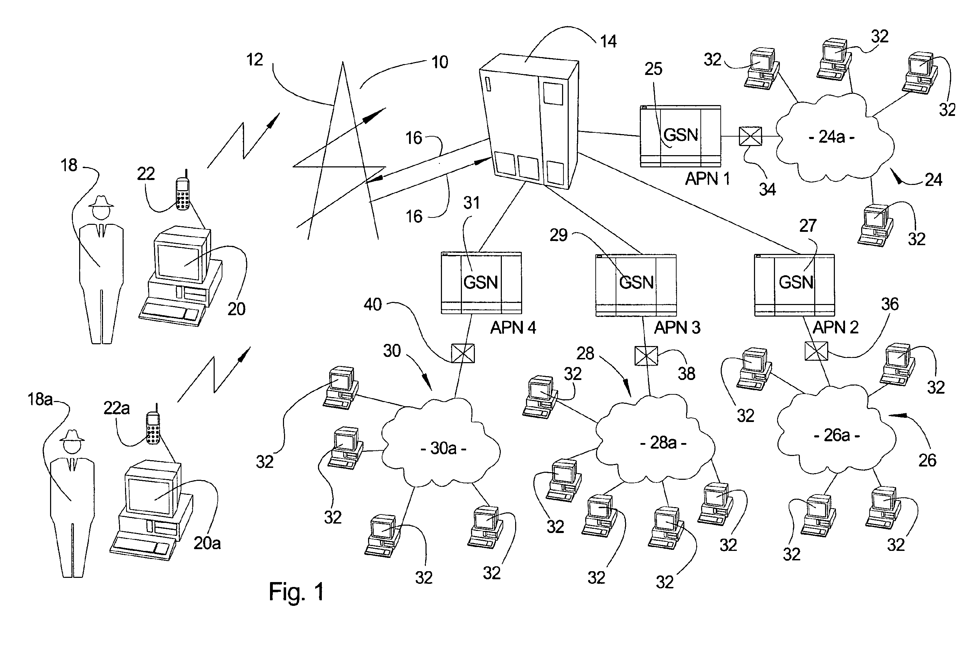

- Fig. 1: zeigt in einer Prinzipskizze Computernetzwerke mit jeweils eigener APN/Einwahlnummer, die mit einem Mobilfunknetz verbunden sind.

### Bevorzugtes Ausführungsbeispiel

Anhand von Fig. 1 soll erläutert werden, wie das erfindungsgemäße Zugangsverfahren abläuft. In Fig. 1 wird mit 10 ein Mobilfunknetz bezeichnet. Das Mobilfunknetz 10 arbeitet vorzugsweise nach dem GSM- oder UMTS-Standard. Andere Mobilfunknetze nach anderen, für das erfindungsgemäße Verfahren geeigneten Standards, beispielsweise TDMA- und EDGE-Netze, sind grundsätzlich ebenfalls denkbar. Das Mobilfunknetz 10 wird durch einen Funkmast 12 und einer computergesteuerten Verwaltungseinheit 14 dargestellt., Pfeile 16 symbolisieren den bidirektionalen Datenaustausch zwischen dem Funkmast 12, der repräsentativ für alle Funkmasten im Mobilfunknetz 10 als Empfangs- und Sendeeinheiten steht und der computergesteuerte Verwaltungseinheit 14. Die Verwaltungseinheit 14 verwaltet insbesondere das Roaming (Bewegungen eines Mobilfunkteilnehmers) im Mobilfunknetz 10 und koordiniert die Verbindungen zu anderen Teilnehmern.

Ein Mobilfunkteilnehmer 18 kann mit einem Computer 20 und einem geeigneten Mobilfunkendgerät 22 über das Mobilfunknetz 10 Zugang zu Computernetzen 24, 26, 28, 30 erhalten. In vorliegendem Ausführungsbeispiel sind beispielhaft vier Computernetze 24, 26, 28, 30 beispielsweise von Firmen oder Behörden dargestellt. Die Computernetze 24, 26, 28, 30 sind üblicherweise ein Verbund von miteinander zum Datenaustausch verbundenen Computern 32. Die Anzahl der Computer 32 ist beliebig und nur von der jeweiligen Netzwerkkapazität abhängig. Die Computernetze 24, 26, 28, 30 werden daher auch teilweise als stilisierte Wolken 24a, 26a, 28a, 30a dargestellt.

Der Computer 20 steht unmittelbar, beispielsweise über Funk (Bluetooth), Infrarotschnittstelle oder Kabel, mit dem Mobilfunkendgerät 22 in Kontakt. Das Mobilfunkendgerät 22 ist als Modem ausgebildet und kann beispielsweise mittels GPRS (= General Packet Radio Service) oder UMTS (= Universal Mobile Telecomunication System) eine Verbindung 34 zwischen den einzelnen Computernetzen 24, 26, 28, 30 und dem Computer 20 herstellen.

Jedem der Computernetzwerk 24, 26, 28, 30 wird nun von der Verwaltungseinheit 14 ein eigener Zugriffsname APN (=Access Point Name) zugeordnet. Die Zuordnung der APN erfolgt auf Netzwerkzugangseinheiten 25, 27, 29, 31. Die jeweils durch die Verwaltungseinheit 14 des Mobilfunknetzes zugeordneten APNs werden mit APN₁, APN₂, APN₃ und APN₄ beispielhaft bezeichnet. Eine APN ist ein Zugriffsname, wie beispielsweise der Domainname beim Internet. Anstelle des APN kann durch die Verwaltungseinheit 14 auch eine geeignete Einwahlnummer entsprechend dem APN zugeordnet werden. Jedes Computernetzwerk 24, 26, 28, 30 ist durch seine APN eindeutig identifizierbar. Der Zugriff des Computers 20 erfolgt nun dadurch, dass bei einer bestehenden GPRS-Verbindung zum Mobilfunknetz 10 die Anfrage für den Zugang zu einem Computernetzwerk 24, 26, 28, 30 direkt durch die Verwaltungseinheit 14 an das entsprechende Computernetzwerk 24, 26, 28, 30 weitergeleitet wird. Der Benutzer 18 muss dazu nur die entsprechende APN des Computernetzwerkes 24, 26, 28, 30 mit seinem Computer 20 angeben, auf welches er gerne Zugriff haben möchte.

In den Netzwerkzugangseinheiten 25, 27, 29, 31 ist jeweils ein HLR (= Home Location Register) abgelegt. Das HLR ist eine Datenbank, in der die Daten der zu dem jeweiligen Computernetzwerk 24, 26, 28, 30 gehörigen Computer 20 und/oder Daten zur Mobilfunkidentifikation des Teilnehmer 18 abgespeichert sind, wodurch insbesondere die Daten zur Mobilfunkkommunikation zur Überprüfung eines Teilnehmers 18 auf eines der Computernetzwerke 24, 26, 28, 30 herangezogen werden können.

Vorzugsweise werden den Computernetzwerken 24, 26, 28, 30 öffentliche und/oder private IP-Adressen bzw. entsprechende Adressbereiche zugeordnet.

Um zu verhindern, dass Unberechtigte, z.B. Benutzer 18a, beliebig auf die Daten zugreifen können, werden den Benutzern 18, welche auf ein Computernetzwerk 24, 26, 28, 30 zugreifen dürfen, geeignete Benutzerrechte eingeräumt. Die Rechte für den Zugriff auf eines der Computernetzwerke 24, 26, 28, 30 werden zuvor jeweils von Administratoren der Computernetzwerke 24, 26, 28, 30 festgelegt. Jedem berechtigten Benutzer 18 können unterschiedliche Benutzungsrechte für das Computernetzwerk eingeräumt werden. Dies kann soweit führen, dass der Benutzer überhaupt nur bestimmte Bereiche bzw. ggf. Gruppen des jeweiligen Computernetzwerkes 24, 26, 28, 30 erreichen kann. Die Netzwerkzugangseinheiten 25, 27, 29, 31 überprüfen jeweils den Berechtigungsstatus eines jeden Computers 20, 20a, der auf eines der Computernetzwerke 24, 26, 28, 30 zugreifen möchte. Gegen unberechtigtes Abgreifen von Datenströmen zwischen den Computern 20 und den Computernetzwerken 24, 26, 28, 30 werden die Daten verschlüsselt übermittelt. Dabei haben sowohl der Empfänger als auch der Sender von Daten geeignete Codier- bzw. Decodiereinrichtungen.

Eine Firewall 34, 36, 38, 40 schützt zusätzlich jeweils die Computernetze 24, 26, 28, 30 vor unberechtigten Zugriffen. Die Firewall 34, 36, 38, 40 eines jeden Computernetzwerkes 24, 26, 28, 30 lässt nur einen Datenaustausch zu Computern zu, die über entsprechende Berechtigungen verfügen. Der Zugriff eines Computers 20a von einem anderen Benutzer 18a, ohne geeignete Berechtigung, wird durch die jeweilige Firewall 34, 36, 38, 40 abgewiesen.

## Patentansprüche

1. Zugangsverfahren für den Zugang eines Computers (20) in ein privates Computernetzwerk (24, 26, 28, 30) über ein Mobilfunknetz (10), wobei der Computer (20) eine Einrichtung (22) für den Zugang zu dem Mobilfunknetz (10) aufweist, **dadurch gekennzeichnet, dass** dem privaten Computernetzwerk (24, 26, 28, 30) eine eigene APN/Einwahlnummer zugeordnet wird, über die der Computer (20) Zugang zu dem privaten Computernetzwerk (24, 26, 28, 30) erhält.

2. Zugangsverfahren für den Zugang eines Computers (20) in ein privates Computernetzwerk (24, 26, 28, 30) nach Anspruch 1, **dadurch gekennzeichnet, dass** eine Zugangsberechtigungsabfrage erfolgt, wobei der Zugang nur für solche Computer (20) zugelassen wird, die berechtigt sind.

3. Zugangsverfahren für den Zugang eines Computers (20) in ein privates Computernetzwerk (24, 26, 28, 30) nach einem der Ansprüche 1 oder 2, **dadurch gekennzeichnet, dass** die übertragenen Daten verschlüsselt sind.

4. Zugangsverfahren für den Zugang eines Computers (20) in ein privates Computernetzwerk (24, 26, 28, 30) nach einem der Ansprüche 1 bis 3, **dadurch gekennzeichnet, dass** unterschiedliche Berechtigungsstufen zugeordnet werden.

5. Zugangsverfahren für den Zugang eines Computers (20) in ein privates Computernetzwerk (24, 26, 28, 30) nach einem der Ansprüche 1 bis 4, **dadurch gekennzeichnet, dass** dem Computer (20) für den Zugang nur bestimmte Bereiche des Computernetzwerks (24, 26, 28, 30) zugeordnet werden.

6. Zugangsverfahren für den Zugang eines Computers (20) in ein privates Computernetzwerk (24, 26, 28, 30) nach einem der Ansprüche 1 bis 5, **dadurch gekennzeichnet, dass** die APN einem Internet-Domain-Namen entspricht

7. Zugangsverfahren für den Zugang eines Computers (20) in ein privates Computernetzwerk (24, 26, 28, 30) nach einem der Ansprüche 1 bis 6, **dadurch gekennzeichnet, dass** dem privaten Computernetzwerk (24, 26, 28, 30) ein eigenes Gatway (GSN) zugeordnet wird.

8. Zugangsverfahren für den Zugang eines Computers (20) in ein privates Computernetzwerk (24, 26, 28, 30) nach einem der Ansprüche 1 bis 7, **dadurch gekennzeichnet, dass** dem privaten Computernetzwerk (24, 26, 28, 30) öffentliche IP-Adressen zugeordnet werden.

9. Zugangsverfahren für den Zugang eines Computers (20) in ein privates Computernetzwerk (24, 26, 28, 30) nach einem der Ansprüche 1 bis 8, **dadurch gekennzeichnet, dass** dem Computernetzwerk (24, 26, 28, 30) private IP-Adressen zugeordnet werden.

10. Zugangsverfahren für den Zugang eines Computers (20) in ein privates Computernetzwerk (24, 26, 28, 30) nach einem der Ansprüche 1 bis 9, **dadurch gekennzeichnet, dass** das Computernetzwerk (24, 26, 28, 30) durch eine "Firewall" (34, 36, 38, 40) und/oder "Portsperren" geschützt ist.
